(19) Europäisches Patentamt
European Patent Office
Office européen des brevets

(11) Publication number: 0 138 204
A1

# (12) EUROPEAN PATENT APPLICATION

(21) Application number: 84112247.6

(22) Date of filing: 11.10.84

(51) Int. Cl.[4]: C 08 K 5/52, C 08 K 5/53, C 08 L 75/04, C 08 L 79/04

(30) Priority: 17.10.83 US 542638

(43) Date of publication of application: 24.04.85 Bulletin 85/17

(84) Designated Contracting States: BE DE FR GB IT NL SE

(71) Applicant: STAUFFER CHEMICAL COMPANY, Westport Connecticut 06880 (US)

(72) Inventor: Fesman, Gerald, 319 Vandelinda Avenue, Teaneck, NJ 07666 (US)
Inventor: Lin, Ruey Yuan, 15 Dolphin Road, New City, NY 10956 (US)
Inventor: Rehder, Richard Alfred, 121 Geymer Drive, Mahopac, NY 10541 (US)

(74) Representative: Jaeger, Klaus, Dr. et al, JAEGER & PARTNER Patentanwälte Bergstrasse 48 1/2, D-8035 München-Gauting (DE)

(54) **Flame retardant mixture for polyurethane materials.**

(57) The present invention relates to a flame retardant mixture of a dialkylalkanolaminoalkylphosphonate and a poly(oxyorganophosphate/phosphonate) flame retardant which finds utility, for example, as a flame retardant in polymers containing urethane linkages. It confers food flame retardancy on the polymer without any substantial reduction in its heat distortion temperature.

EP 0 138 204 A1

0138204

# FLAME RETARDANT MIXTURE FOR POLYURETHANE MATERIALS

## Background of the Invention

### Field of the Invention

The present invention relates to a mixture of organophosphorus flame retardants for use in polyurethane materials.

### Description of the Prior Art

Dialkylalkanolaminoalkylphosphonate flame retardants, such as described in U. S. Patent No. 3,235,517 to T. M. Beck et al., are a known class of flame retardants. One representative compound of this class (i.e., diethyl N,N-bis(2-hydroxyethyl)aminomethylphosphonate) is commercially available under the trademark FYROL 6 from Stauffer Chemical Company. Compounds of this type have been suggested as useful in rendering polyurethane products flame retardant. However, use of such a flame retardant can lead to embrittlement of the product if used in amounts designed to give a relatively high phosphorus content.

Another class of known flame retardant, which carry a higher phosphorus content, is the poly(oxyorganophosphate/phosphonate) flame retardants of the type described in U. S. Patent Nos. 4,199,534; 4,268,633; and 4,335,178 to R. B. Fearing. Flame retardants of this type are marketed by Stauffer Chemical Company under the trademark FYROL 51. Use of this latter class of flame retardant has resulted in an unacceptable

lowering of the heat distortion temperature of polymeric materials containing urethane when used to give a relatively higher phosphorus content than the type of flame retardant shown in the Beck et al. patent.

## Summary of the Present Invention

Mixtures of the aforementioned dialkylalkanolaminoalkylphosphonate and poly(oxyorganophosphate/phosphonate) flame retardants, when added to polymeric materials containing urethane linkages, has unexpectly been found to produce an acceptable flame retardant composition without a substantial loss in heat distortion temperature.

## Detailed Description of the Present Invention

The terminology "dialkylalkanolaminoalkylphosphonate", as used herein, is meant to encompass the type of flame retardants shown in U. S. Patent No. 3,235,517 to T. M. Beck et al. Such compounds can be represented by the general formula

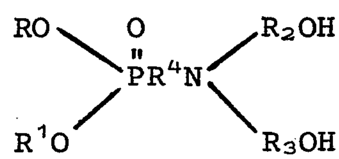

where R and $R^1$ can independently be alkyl (e.g., $C_1$-$C_4$) and/or haloalkyl (e.g., $C_1$-$C_4$ chloroalkyl) radicals, $R_2$ and $R_3$ can be the same or different lower alkylene radicals (e.g., $C_1$-$C_4$), and $R_4$ is a lower alkylene radical. They are made by reaction of a dialkylanol-

amine, an aldehyde or ketone, and a dialkyl phosphite as described in the Beck et al. patent.

The terminology "poly(organophosphate/phosphonate)" as used herein is intended to encompass the type of flame retardants shown in U. S. Patent Nos. 4,199,534; 4,268,633; and 4,335,178. Such compounds can be represented by the average formula

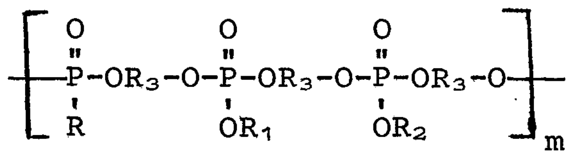

wherein m is an integer from 1 to 50; R, $R_1$ and $R_2$ are individually selected from saturated hydrocarbon radicals alkaryl radicals, aralkyl radicals, and aryl radicals; and $R_3$ is:

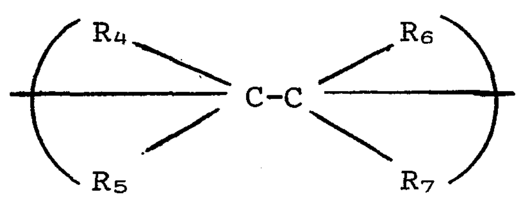

wherein $R_4$, $R_5$, $R_6$ and $R_7$ are individually selected from hydrogen atom, hydrocarbon radicals, and halogenated hydrocarbon radicals.

Such compounds can be formed by reaction of a diorgano organophosphonate with a phosphorus oxide, followed by reaction of the reaction product with an epoxide, either alone or in admixture with an alcohol.

Mixtures of the above two organophosphorus flame retardants (e.g., at weight ratios of from about 30:70 to about 70:30) are useful as flame retardants in polymers containing urethane linkages. Examples of

such polymers include rigid polymers containing urethane linkages. Included are the polyether and polyester polyurethane materials (either foamed or unfoamed) that are known to persons of ordinary skill in the art. One representative class of such polymers are the poly(oxazolidone/urethane) compositions described in U. S. Patent No. 4,386,191 to A. L. DiSalvo et al. Such compositions contain oxazolidone linkages in their polymer backbone separated by ester linkages (e.g., derived from an acid anhydride moiety) and have urethane side chains attached to the polymer backbone. They are formed by reacting a polyisocyanate with a prepolymer containing epoxy and hydroxy groups. The prepolymer is formed by reacting a polyol, acid anhydride and diepoxide, preferably in a single step reaction. The amount of flame retardant mixture in the selected urethane-containing polymer is an effective amount to confer the desired degree of flame retardance on the polymer and can range from about 5% to about 15% by weight of the polyurethane.

The present invention is illustrated by the Examples which follow. Each of U. S. Patent Nos. 3,235,517, 4,199,534, 4,268,633 and 4,335,178, mentioned hereinbefore, is incorporated by reference as showing the type of flame retardants also described before. U. S. Patent No. 4,386,191 is incorporated herein by reference as describing the poly(oxazolidone/urethane) material described earlier.

EXAMPLE 1

This Example illustrates the process used to make the poly(oxazolidone/urethane) composition which was tested in Example 2.

A mixture of 148 grams (1.0 equivalent weight) of phthalic anhydride, 305 grams (1.02 hydroxy equivalent weights) of polyethylene glycol (ave. mol. wt. 600), 385 grams (1.01 epoxy equivalent weights) of the diglycidyl ether of bisphenol A (EPON 828 brand from Shell Chemical Co.), and 3.3 grams of methyltrialkyl ($C_8$-$C_{10}$) ammonium chloride catalyst (ADOGEN 464 brand from Sherex Chemical Company, Inc.) was heated at 122°C. - 130°C. After 40 minutes of heating, the resulting product was found to be free of acidic material, and it had an epoxide equivalent of 927.

The prepolymer was blended with ethylene glycol chain extender at a prepolymer/chain extender ratio of 76/24. To 100 parts by weight of the blend was then added about 0.1 part by weight of dibutyl tin dilaurate to act as a catalyst. This reactive mixture is referred to hereinafter as "Component B" and was used to react with various diisocyanates to form poly(oxazolidone/urethane) thermosets.

A thermoset plaque prepared by reacting 101 grams of Component B with 145 grams of 4,4'-diphenylmethane diisocyanate (ISONATE 143L brand from Upjohn Chemical Company) was subjected to the UL-94 vertical burn test. It showed little flame retardancy and was totally burned. This plaque serves as a control for the results reported in Example 2 (i.e. Run A).

EXAMPLE 2

A series of thermoset plaques were prepared using the reactive component B described in Example 1. and ISONATE 143L diisocyanate as Component A. In these plaques, various flame retardants were added to impart flame retardant properties. The resulting plaques were subjected to the UL 94 burn test and to a heat distortion temperature (HDT) determination. The composition of these plaques and the properties are summarized below:

| Plaque | Comp. A (parts by wgt.) | Comp. B (parts by wgt.) | Flame Retardant Type | Flame Retardant Quantity (wt.%) | UL-94 Test | HDT (°C at 1.82 MPa) |
|---|---|---|---|---|---|---|
| A | 145 | 101 | None | None | Failed | 96 |
| B | 165 | 100 | FYROL-6 brand | 10 | V-O | 94 |
| C | 149 | 100 | FYROL-51 brand | 10 | V-O | 60 |
| D | 154 | 100 | FYROL-6 brand/ FYROL-51 brand | 5/5 | V-O | 94 |

Based on these data it is apparent that the mixed flame retardant, (plaque D) produced the best balanced results.

EXAMPLE 3

A series of reaction injection molding (RIM) experiments were conducted using the formulated mixture as Component B and 4,4'-diphenyl methane diisocyanate (Upjohn Chemicals' ISONATE 191) as Component A. A small amount of trichlorofluoromethane (ISOTRON 11 SBA from Pennwalt Corporation) was added to Component B to act as a blowing agent. Foamed plaques were prepared by a RIM process, and the plaques were subjected to the UL 94 vertical burn test. The compositions of the plaques and the UL 94 test results are shown below:

| | Component B (parts by weight) | | | | | | |
|---|---|---|---|---|---|---|---|
| | Prepolymer* | Ethylene Glycol | FYROL-6 brand | FYROL-51 brand | Component A | Wt. Ratio of A/B | UL-94 |
| 1) | 76 | 24 | 10 | - | ISONATE 191 | 143/100 | Failed |
| 2) | 76 | 24 | 15 | - | ISONATE 191 | 142/100 | Marginal |
| 3) | 76 | 24 | 15 | 5 | ISONATE 191 | 144/100 | V-O |

*The prepolymer used here is the same as that described in Example 1. The amount of blowing agent was 3 - 5 parts by weight per 100 parts by weight of Component B.

FYROL-51 brand flame retardant appears to be effective in improving the flame retardancy properties of the RIM molded plaques when used in conjunction with FYROL 6 flame retardant.

EXAMPLE 4

Several formulated Components B similar to those described in Example 3 were reacted with various commercially available diisocyanates in a reaction injection molding (RIM) process to form test specimens with a density in the range of 0.6 to 0.9 gm/cc. These test specimens were then subjected to the UL-94 vertical burn test. The compositions of specimens and the test results are as follows:

| | Component B (parts by weight) | | | | | | |
|---|---|---|---|---|---|---|---|
| | Prepolymer (1) | Ethylene Glycol | FYROL-6 brand | FYROL-51 brand | Component A | Wt. Ratio of A/B | UL-94 |
| 1) | 76 | 24 | 5 | 5 | ISONATE 191 (2) | 127/100 | VO |
| 2) | 76 | 24 | 3 | 3 | PAPI 94 (3) | 119/100 | V1/VO |
| 3) | 76 | 24 | 5 | 5 | PAPI 94 (3) | 121/100 | VO |

(1): Prepolymer - same as Example 1

(2): ISONATE 191 brand - Commercial diisocyanate from Upjohn Chemical Company

(3): PAPI 94 brand - Commercial polymeric methylene/diisocyanate from Upjohn Chemical Company

The results show that the flame retardant contents at a level of 3/3/100 (FYROL-6/FYROL-51/prepolymer and ethylene glycol) was borderline, but was quite sufficient at a 5/5/100 level. The results also show the flame retardant effectiveness of FYROL-6 and FYROL-51 brands in both ISONATE 191 and PAPI 94 diisocyanate molded products.

EXAMPLE 5

The formulated polyol: prepolymer/ethylene glycol/FYROL-6 brand/FYROL-51 brand/ISOTRON 11 SBA brand (76/24/5/5/5); was reaction injection molded with a polymeric methylene diisocyanate: PAPI 94 brand (from Upjohn Chemical Company); to form RIM plaques with various densities. These plaques were then subjected to physical and flame retardant tests. The results are shown in the following Table:

| Property | Test | Unit | RIM Foam Samples 1 | 2 | 3 |
|---|---|---|---|---|---|
| Density | ASTM D792 | g/cc | 0.67 | 0.87 | 1.07 |
| Tensile Strength | ASTM D638 | MPa | 17.7 | 42.3 | 63.3 |
| Elongation | ASTM D638 | % | 5.1 | 8 | 10.8 |
| Flexural Modulus | ASTM D790 | | | | |
| Rm. Temp. | | MPa | 1130 | 2095 | 2440 |
| 70°C.* | | MPa | 324 | 907 | 1392 |
| Charpy Impact | ASTM D256 | J/M | 69 | 144 | 288 |
| (on open surface) ** | | $KJ/M^2$ | 5.5 | 11.1 | 22.2 |
| HDT | ASTM D648 | | | | |
| 1.82 MPa | | °C. | 66 | 75 | 76 |
| 0.46 MPa | | °C. | 77 | 86 | 86 |
| Shore D Hardness | ASTM D2240 | | 70 | 77 | 80 |
| Flammability | UL 94 | | V-O | V-O | V-O |

* Heat soak time prior to testing: 3 minutes

** The sample was 6.35 mm x 12.7 mm x 127 mm.

The foregoing Examples have been set forth to illustrate certain embodiments of the present invention and should not be construed in a limiting sense. The appended claims set forth the scope of protection desired.

What is Claimed:

1. A flame retardant mixture, adapted for use with polyurethane materials, which comprises: (a) a dialkylalkanolaminoalkylphosphonate flame retardant, and (b) a poly(oxyorganophosphate/phosphonate flame retardant.

2. A mixture as claimed in Claim 1 wherein flame retardant (a) has the formula

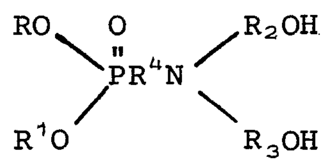

where R and $R^1$ are independently selected from the group consisting of alkyl and haloalkyl, $R^2$ and $R^3$ are lower alkylene, and $R^4$ is lower alkylene.

3. A mixture as claimed in Claim 1 wherein flame retardant (a) is diethyl N,N-bis(2-hydroxyethyl) aminomethylphosphonate.

4. A mixture as claimed in Claim 1 wherein flame retardants (a) and (b) are present in a weight ratio of from about 30:70 to about 70:30.

5. A mixture as claimed in Claim 1 wherein flame retardant (b) is of the formula

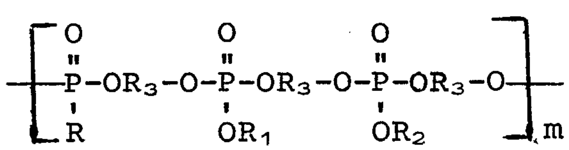

wherein m is an integer from 1 to 50; R, $R_1$, and $R_2$ are individually selected from saturated hydrocarbon radical, alkaryl radical, aralkyl radical, and aryl radical; and $R_3$ is:

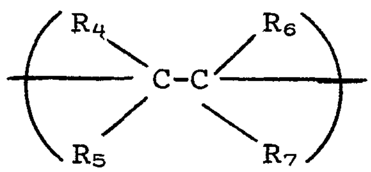

wherein $R_4$, $R_5$, $R_6$ and $R_7$ are individually selected from hydrogen atom, hydrocarbon radical, and halogenated hydrocarbon radical.

6. A polymer containing urethane linkages which contains any of the flame retardant mixtures of Claims 1 - 5.

7. A polymer containing urethane linkages which contains from about 5% to about 15%, by weight, of any of the flame retardant mixtures of Claims 1 - 5.

8. A poly(oxazolidone/urethane) composition which contains from about 5% to about 15%, by weight, of any of the flame retardant mixtures of Claims 1 - 5.

9. A poly(oxazolidone/urethane) composition which contains oxazolidone linkages in its polymeric backbone separated by ester linkages and which has urethane side chains attached to the polymer backbone and which contains an effective flame retardant amount of any of the mixtures of Claims 1 - 5.

10. A poly(oxazolidone/urethane) composition which contains oxazolidone linkages in its polymer backbone separated by ester linkages and which has urethane side chains attached to the polymer backbone and which contains from about 5% to about 15%, by weight, of any of the mixtures of Claims 1 - 5.

European Patent Office

# EUROPEAN SEARCH REPORT

0138204
Application number
EP 84 11 2247

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-3 235 517 (T. BECK et al.) * Claims * | 1-3 | C 08 K 5/52<br>C 08 K 5/53<br>C 08 L 75/04<br>C 08 L 79/04 |
| A | EP-A-0 005 329 (STAUFFER CHEMICAL COMP.) * Claim 10 * | 1,5 | |
| A | EP-A-0 077 174 (STAUFFER CHEMICAL COMP.) * Claims 10-13 * | 8-10 | |
| | | | **TECHNICAL FIELDS SEARCHED (Int. Cl.4)** |
| | | | C 08 G<br>C 08 K<br>C 08 L |

The present search report has been drawn up for all claims

| Place of search | Date of completion of the search | Examiner |
|---|---|---|
| THE HAGUE | 25-01-1985 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03 82